# EUROPEAN PATENT APPLICATION

(11) **EP 2 595 135 A1**
(43) Date of publication of application: **22.05.2013**
(21) Application number: 11189385.5
(22) Date of filing: 16.11.2011
(51) Int. Cl.: G08G 1/16, B60K 31/00, B60T 7/12, B60W 30/08

(54) **Method and arrangement for collision avoidance**

(71) Applicant: Volvo Car Corporation, 40531 Göteborg (SE)
(72) Inventor: Eidehall, Andreas, 43138 Mölndal (SE)

(57) **Abstract**

Embodiments herein relate to an arrangement and a method for improving the performance of an automotive vehicle collision avoidance system. The presence of a target object (3) in front of a vehicle (4) hosting said arrangement (1) is established. The presence of one or more further obstacles (8) preventing the host vehicle (4) to safely steer past the target object (3) is established. The risk of a collision between the host vehicle (4) and the target object (3) is assessed, whereby an established presence of a target object (3) and one or more such further obstacles (8) are included in the risk assessment. Automatic emergency braking of the host vehicle (4) is initiated based on the risk assessment. Knowing that the possibility to steer around e.g. a forward vehicle may be blocked by a road barrier or another vehicle automatic emergency braking may be initiated earlier, whereby an improved speed reduction may be provided.

## Description

### Technical field

Embodiments herein relate to an arrangement for improving the performance of an automotive vehicle collision avoidance system in accordance with the preamble of claim 1.

Embodiments herein further relate to a method for improving the performance of an automotive vehicle collision avoidance system in accordance with the preamble of claim 6.

### Background

The World Health Organization estimates that traffic accidents annually cause 1.2 million fatalities and as many as 50 million injuries. It is predicted that these figures will increase by 65% over the next 20 years unless there is new commitment to prevention. Despite these large numbers, traffic conflicts are rare events for individuals and thus, drivers can not solely rely on learning from experience to avoid accidents.

Fortunately, most drivers are generally good at foreseeing and avoiding potential conflicts at an early stage. However, no human is perfect and a slight distraction or misjudgment may result in an accident. Even if a driver should be perfect, there is still a possibility that another road user makes a mistake that puts the driver in a situation where a collision can not be avoided.

Accident research has shown that some accidents are caused by vehicle failure, but most accidents are caused by human errors. One way to reduce the number of accidents and their consequences is to assist road users in their driving task, e.g. by assisting in detecting and handling potential hazards. This is called active safety or in more general terms preventive safety.

An important subset of preventive safety is collision avoidance systems, aiming at assisting the driver in avoiding collisions with objects and other road users. As automotive safety is gaining interest from the general public and governments, vehicle manufacturers are introducing an increasing amount of driver assistance features. Several manufactures now offer functionality that help the driver in avoiding collisions by providing warnings or even automatic intervention braking when a collision is imminent.

State-of-the-art collision avoidance technology relies on in-vehicle sensors like radars and cameras that constantly monitor the area in front of the vehicle. If the vehicle approaches another vehicle and the driver needs to undertake an action to avoid an accident, an audible and/or visible warning is provided in order to increase the driver's attention in such a way that he or she can avoid or mitigate the accident. If the driver does not intervene in spite of the warning and the collision threat becomes imminent, intervention braking may be automatically applied to slow down the vehicle.

Imminent refers to the situation where it is judged that an accident cannot physically be avoided by the driver through braking, steering or accelerating. In this way it may not be possible for the collision avoidance/collision mitigation system to always avoid a collision, but it may still serve to reduce impact speed and thus mitigate the risk of severe consequences.

Collision avoidance systems may use sensors such as RADAR (RAdio Detection And Ranging), LIDAR (Light Detection And Ranging), LASER (Light Amplification by Stimulated Emission of Radiation) and cameras to monitor the region in front of the host vehicle. A tracking algorithm may be used to estimate the state of the objects ahead (targets) and a decision algorithm may use the estimated states to determine any action, e.g. warning the driver or perform autonomous braking.

The decision algorithms in automotive collision avoidance systems continuously evaluate the risk for a collision. However, in such an evaluation, previous systems including intervention braking have only been able to provide a limited amount of speed reduction.

### Summary

Embodiments herein aim to provide an arrangement and method for improving the performance of an automotive vehicle collision avoidance system.

This is provided by an arrangement comprising: means for establishing the presence of a target object in front of a vehicle hosting said arrangement; and means for performing an assessment of the risk of a collision between the host vehicle and the target object; and means for initiating automatic emergency braking of the host vehicle based on the risk assessment, characterized in that it further comprises means for establishing the presence of one or more further obstacles preventing the host vehicle to safely steer past the target object; whereby the means for performing the risk assessment further are configured to include an established presence of a target object and one or more such further obstacles in the risk assessment.

The provision of means for establishing the presence of one or more further obstacles preventing the host vehicle to safely steer past the target object ensures that automatic emergency braking may be initiated earlier if the host vehicle is prevented from avoiding a collision by safely steering past the target object. Earlier initiation of automatic emergency braking makes it possible to reduce the velocity of the host vehicle to a greater extent in order to avoid or mitigate a potential collision.

According to a second aspect the means for establishing the presence of one or more further obstacles comprises means for lateral and rear end monitoring of an area surrounding the host vehicle.

The provision of means for lateral and rear end monitoring, as described for the second aspect, enables establishing obstacles adjacent the host vehicle or approaching from behind the host vehicle.

According to a third aspect the means for establishing the presence of one or more further obstacles comprises an arrangement for Rear and Side Detection and Lane Change Merge Assist configured to establish the presence of any further obstacles behind and adjacent the host vehicle.

Utilization of an arrangement for Rear and Side Detection and Lane Change Merge Assist, as described for the third aspect, allows for integration with potentially already present systems for configured to establish the presence of any further obstacles. Hereby cost efficient and integration into new vehicles and potentially also retrofitting of current vehicles provided with an arrangement for Rear and Side Detection and Lane Change Merge Assist is enabled.

According to a fourth aspect the means for establishing the presence of one or more further obstacles comprises one or more sensors based on at least one of technologies such as RAdio Detection And Ranging, Light Detection And Ranging, Light Amplification by Stimulated Emission of Radiation and cameras.

Use of one or more sensors based on at least one of the above technologies, as described for the fourth aspect, provides proven and cost efficient integration of the arrangement.

According to a fifth aspect the means for establishing the presence of one or more further obstacles further are arranged to establish data relating to one or more of a size, position, velocity, direction of travel, acceleration and deceleration of any such further obstacles established present, whereby the means for performing the risk assessment further are configured to include such data in the risk assessment.

Inclusion of such data as mentioned above, as described for the fifth aspect, provides for performance of an improved risk assessment as the basis for initiating automatic emergency braking of the host vehicle.

The method provides for the same advantages as described above for aspects of the arrangement.

### Brief description of the drawings

In the following, embodiments herein will be described in greater detail by way of example only with reference to attached drawings, in which
Fig. 1 is a schematic illustration of an embodiment of a vehicle hosting an arrangement for improving the performance of an automotive vehicle collision avoidance system.
Fig. 2 is a schematic illustration a vehicle according to figure 1 traveling at a three lane road comprising additional vehicles.

Still other objects and features of embodiments herein will become apparent from the following detailed description considered in conjunction with the accompanying drawings. It is to be understood, however, that the drawings are designed solely for purposes of illustration and not as a definition of the limits hereof, for which reference should be made to the appended claims. It should be further understood that the drawings are not necessarily drawn to scale and that, unless otherwise indicated, they are merely intended to conceptually illustrate the structures and procedures described herein.

### Description of embodiments

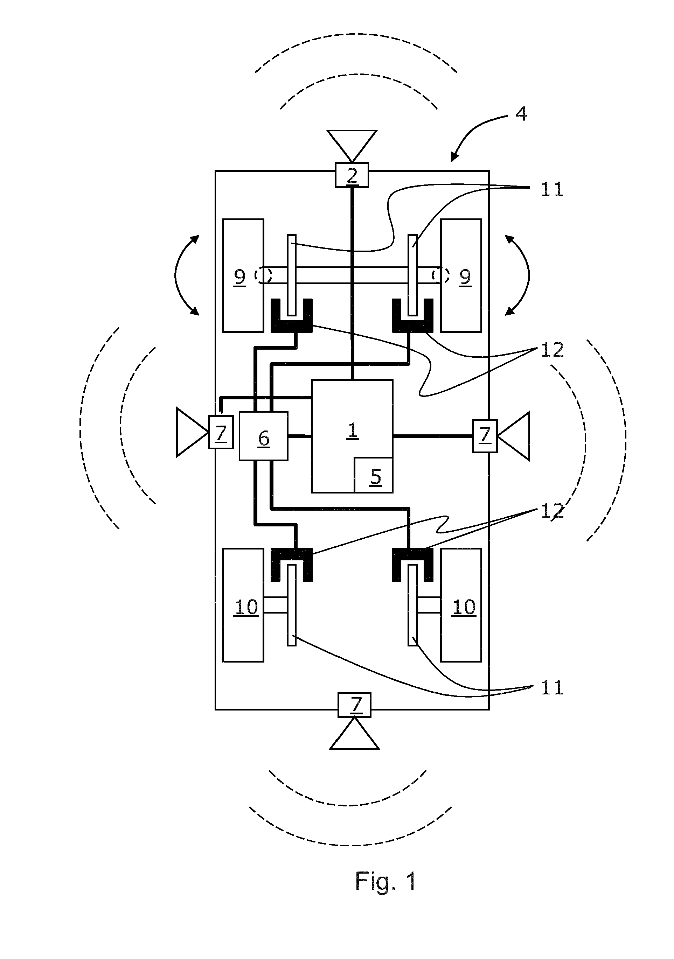

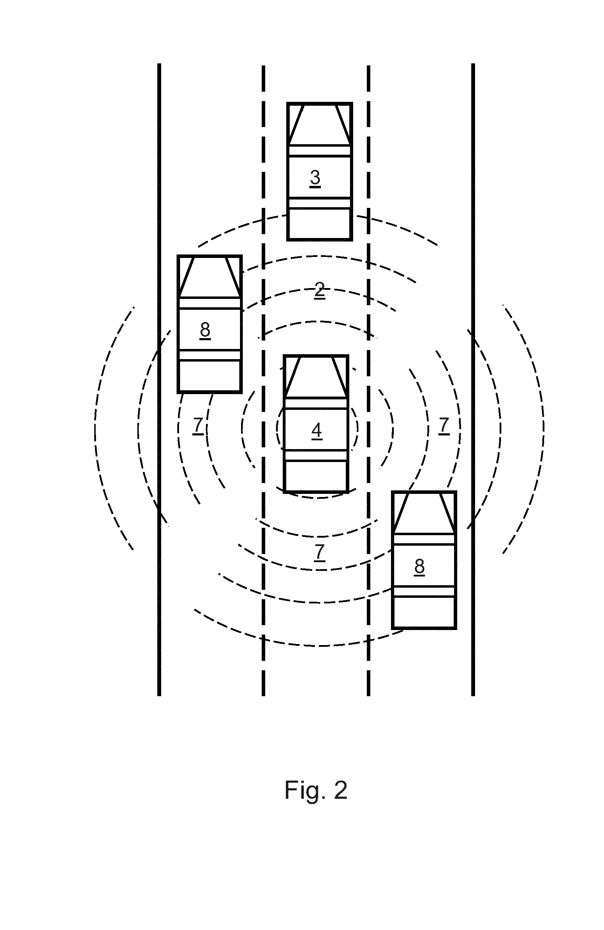

In overview, embodiments herein, as shown schematically in figure 1, relate to an arrangement 1 for improving the performance of an automotive vehicle collision avoidance system. The arrangement comprises means 2 for establishing the presence of a target object 3, in front of a vehicle 4 hosting the arrangement 1. Figure 2 illustrates a host vehicle 4 according to figure 1 traveling at a three lane road comprising additional vehicles 3, 8.

The host vehicle 4 has a breaking system such as an Antilock Brake System (ABS system), e.g. with brake discs 11 and appertaining calipers 12 associated with each of the front wheels 9 and rear wheels 10 of the host vehicle 4.

The means 2 for establishing the presence of a target object 3 in front of the host vehicle 4 will usually comprise one or more sensors based on at least one of technologies such as RAdio Detection And Ranging (RADAR), LIght Detection And Ranging (LIDAR), Light Amplification by Stimulated Emission of Radiation (LASER) and cameras arranged to monitor the region in front of the host vehicle 4.

The arrangement 1 further comprises means 5 for performing an assessment of the risk of a collision between the host vehicle 4 and the target object 3. These means 5 for performing the risk assessment are suitably implemented as a combination of a micro-processor and associated software. Decision algorithms comprised in the software when executed continuously evaluate the risk for a collision.

Still further, the arrangement 1 comprises means 6 for initiating automatic emergency braking of the host vehicle 4 based on the risk assessment performed. These means 6 are suitably integral to or operatively connected to a brake controller of a brake system of the host vehicle 4.

In order to provide for improved performance of the collision avoidance system the arrangement further comprises means 7 for establishing the presence of one or more further obstacles 8 preventing the host vehicle 4 to safely steer past the target object 3.

The means 5 for performing the risk assessment are further configured to include an established presence of a target object 3 and one or more such further obstacles 8 in the risk assessment. Thus, multi target/obstacle 3, 8 threat assessment may be carried out on several targets/obstacles 3, 8 whereby a decision to apply the brakes of the host vehicle 4 may be taken based at more complete information related to the current collision threat.

Having the knowledge that the driver of the host vehicle 4 does not have the possibility to perform en evasive action through steering past a target object 3 in the lane travelled, such as a further vehicle, it becomes possible to perform automatic emergency braking earlier, thus making it possible to reduce the velocity of the host vehicle 4 more in order to avoid or mitigate a potential collision with the target object 3.

Thus, the arrangement provides for Automatic Emergency Braking (AEB) where braking intervention may be performed earlier if determined that adjacent lanes are blocked. This as braking only will be initiated once it is judged that an accident cannot physically be avoided by the driver of the host vehicle 4 through performing a steering operation, which normally will be possible closer to a potential collision object, i.e. target object 3, than it will be possible to avoid a collision therewith through braking.

The possibility for the driver to steer around a target object 3, such as a forward vehicle, may be blocked by obstacles 8 such as a road barrier or another vehicle in an adjacent lane. Through using this extra information, a decision that a collision is unavoidable may be taken by the means 5 for performing the risk assessment at an earlier point in time, whereby a larger amount of speed reduction may be provided through automatic emergency braking.

In embodiments, the means 7 for establishing the presence of one or more further obstacles 8 still further comprises means for lateral and rear end monitoring of an area surrounding the host vehicle 4.

This is beneficial for instance if there is a vehicle 8 in an adjacent lane travelling at approximately the same velocity as the host vehicle 4. The option to steer in that direction is then blocked. Similarly, if a vehicle 8 in an adjacent lane is approaching from behind at a higher velocity than the host vehicle 4 it may also be concluded that the option to steer in that direction is blocked.

An important scenario where this approach will improve the performance of a system for automatic emergency braking dramatically is during normal highway driving where there is traffic in several lanes travelling at approximately the same velocity. If the leading vehicle, i.e. target object 3, suddenly brakes, a conventional collision avoidance system, only considering obstacles ahead, would potentially wait to apply automatic emergency braking in order to allow a driver of the host vehicle 4 to avoid a collision with the leading vehicle, i.e. target object 3, through steering past it. Thus, as a collision normally can be avoided later through steering, this arrangement 1 makes it possible to initiate automatic emergency braking at an earlier point in time once decided that collision avoidance through steering is not available.

In further embodiments an arrangement for Rear and Side Detection and Lane Change Merge Assist configured to establish the presence of any further obstacles 8 behind and adjacent the host vehicle 4 may be relied on as the means 7 for establishing the presence of one or more further obstacles 8. Hereby cost efficient and integration into vehicles provided with an arrangement for Rear and Side Detection and Lane Change Merge Assist is enabled.

In still further embodiments the means 7 for establishing the presence of one or more further obstacles 8 comprises one or more sensors based on at least one of technologies such as RAdio Detection And Ranging (RADAR), LIght Detection And Ranging (LIDAR), Light Amplification by Stimulated Emission of Radiation (LASER) and cameras.

For further improved performance, according to yet further embodiments the means 7 for establishing the presence of one or more further obstacles 8 are further arranged to establish data relating to one or more of a size, position, velocity, direction of travel, acceleration and deceleration of any such further obstacles 8 established present. The means 5 for performing the risk assessment are further configured to include such data relating to one or more of a size, position, velocity, direction of travel, acceleration and deceleration of any such further obstacles 8 established present in the risk assessment.

The present application also provides a method for improving the performance of an automotive vehicle collision avoidance system.

The method comprises the steps of:
● establishing the presence of a target object 3 in front of a vehicle 4 hosting said arrangement 1;
● establishing the presence of one or more further obstacles 8 preventing the host vehicle 4 to safely steer past the target object 3;
● assessing the risk of a collision between the host vehicle 4 and the target object 3 whereby an established presence of a target object 3 and one or more such further obstacles 8 are included in the risk assessment;
● initiating automatic emergency braking of the host vehicle 4 based on the risk assessment.

In embodiments of the method the step of establishing the presence of one or more further obstacles 8 further includes lateral and rear end monitoring of an area surrounding the host vehicle 4.

In further embodiments of the method the step of establishing the presence of one or more further obstacles 8 further includes using an arrangement for Rear and Side Detection and Lane Change Merge Assist to establish the presence of any further obstacles 8 behind and adjacent the host vehicle 4.

In yet further embodiments of the method the step of establishing the presence of one or more further obstacles 8 further includes using one or more sensors based on technologies such as RAdio Detection And Ranging (RADAR), LIght Detection And Ranging (LIDAR), Light Amplification by Stimulated Emission of Radiation (LASER) and cameras.

In still further embodiments of the method the step of establishing the presence of one or more further obstacles 8 further includes establishing data relating to one or more of a size, position, velocity, direction of travel, acceleration and deceleration of any such further obstacles 8 established present, and the step of performing the risk assessment further is performed including such data in the risk assessment.

In accordance with the present application is also envisaged a vehicle comprising an arrangement as described above.

The above-described embodiments may be varied within the scope of the following claims.

Thus, while there have been shown and described and pointed out fundamental novel features of the embodiments herein, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are equivalent. Moreover, it should be recognized that structures and/or elements and/or method steps shown and/or described in connection with any disclosed form or embodiment herein may be incorporated in any other disclosed or described or suggested form or embodiment as a general matter of design choice.

## Claims

1. An arrangement (1) for improving the performance of an automotive vehicle collision avoidance system, comprising: means (2) for establishing the presence of a target object (3) in front of a vehicle (4) hosting said arrangement (1); and means (5) for performing an assessment of the risk of a collision between the host vehicle (4) and the target object (3); and means (6) for initiating automatic emergency braking of the host vehicle (4) based on the risk assessment, **characterized in that** it further comprises means (7) for establishing the presence of one or more further obstacles (8) preventing the host vehicle (4) to safely steer past the target object (3); whereby the means (5) for performing the risk assessment further are configured to include an established presence of a target object (3) and one or more such further obstacles (8) in the risk assessment.

2. An arrangement according to claim 1, **characterized in that** the means (7) for establishing the presence of one or more further obstacles (8) comprises means for lateral and rear end monitoring of an area surrounding the host vehicle (4).

3. An arrangement according to any one of claims 1 to 2, **characterized in that** the means (7) for establishing the presence of one or more further obstacles (8) comprises an arrangement for Rear and Side Detection and Lane Change Merge Assist configured to establish the presence of any further obstacles (8) behind and adjacent the host vehicle (4).

4. An arrangement according to any one of claims 1 to 3, **characterized in that** the means (7) for establishing the presence of one or more further obstacles (8) comprises one or more sensors based on at least one of technologies such as RAdio Detection And Ranging, LIght Detection And Ranging, Light Amplification by Stimulated Emission of Radiation and cameras.

5. An arrangement according to any one of claims 1 to 4, **characterized in that** the means (7) for establishing the presence of one or more further obstacles (8) further are arranged to establish data relating to one or more of a size, position, velocity, direction of travel, acceleration and deceleration of any such further obstacles (8) established present, whereby the means (5) for performing the risk assessment further are configured to include such data in the risk assessment.

6. A method for improving the performance of an automotive vehicle collision avoidance system, **characterized in that** it comprises the steps of:
establishing the presence of a target object (3) in front of a vehicle (4) hosting said arrangement (1);
establishing the presence of one or more further obstacles (8) preventing the host vehicle (4) to safely steer past the target object (3);
assessing the risk of a collision between the host vehicle (4) and the target object (3) whereby an established presence of a target object (3) and one or more such further obstacles (8) are included in the risk assessment; and
initiating automatic emergency braking of the host vehicle (4) based on the risk assessment.

7. A method according to claim 6, **characterized in that** the step of establishing the presence of one or more further obstacles (8) further includes lateral and rear end monitoring of an area surrounding the host vehicle (4).

8. A method according to any one of claims 6 to 7, **characterized in that** the step of establishing the presence of one or more further obstacles (8) further includes using an arrangement for Rear and Side Detection and Lane Change Merge Assist to establish the presence of any further obstacles (8) behind and adjacent the host vehicle (4).

9. A method according to any one of claims 6 to 8, **characterized in that** the step of establishing the presence of one or more further obstacles (8) further includes using one or more sensors based on technologies such as RAdio Detection And Ranging, LIght Detection And Ranging, Light Amplification by Stimulated Emission of Radiation and cameras.

10. A method according to any one of claims 6 to 9, **characterized in that** the step of establishing the presence of one or more further obstacles (8) further includes establishing data relating to one or more of a size, position, velocity, direction of travel, acceleration and deceleration of any such further obstacles (8) established present, and the step of performing the risk assessment further is performed including such data in the risk assessment.

11. A vehicle **characterized in that** it comprises an arrangement according to any one of claims 1 to 5.
